# EUROPEAN PATENT SPECIFICATION

(11) **EP 0 593 080 B1**
(45) Date of publication and mention of the grant of the patent: **08.04.1998**
(21) Application number: 93116724.1
(22) Date of filing: 15.10.1993
(51) Int. Cl.: B41M 7/02

(54) **A print-laminated product**
Laminiertes bedrucktes Erzeugnis
Produit imprimé laminé

(30) Priority: 15.10.1992 JP 301548/92
(43) Date of publication of application: 20.04.1994
(73) Proprietor: MITSUBISHI CHEMICAL CORPORATION, Chiyoda-ku, Tokyo (JP); WADA CHEMICAL INDUSTRY CO., LTD., Chiyoda-ku, Tokyo (JP)
(72) Inventor: Nagaoka, Yoshinobu, c/o Mitsubishi Petrochem., Yokkaichi, Mie (JP); Hashimoto, Yoshinori, c/o Mitsubishi Petrochem., Yokkaichi, Mie (JP); Takizawa, Hisao, c/o Wada Chem. Ind. Co., Ltd., Kurimoto-cho, Katori-gun, Chiba (JP); Miyazaki, Masahiro, c/o Wada Chem. Ind. Co., Ltd., Kurimoto-cho, Katori-gun, Chiba (JP)
(74) Representative: Hansen, Bernd, Dr. Dipl.-Chem.

(56) References cited:
- EP-A- 0 397 425
- DATABASE WPI, n 89-373388,Derwent Publications Ltd,London,GB; JP-A-1278345(TORAY)08-11-1989 *The entire abstract*
- DATABASE WPI,n 81-41260D,Derwent Publications Ltd,London,GB; JP-A-56042652(TORAY)20-04-1981 *The entire abstract*
- DATABASE WPI,n 87-224452 Derwent Publications Ltd,London,GB; JP-A-62148752(DAINIPPON PRINTING) 02-07-1987*The entire abstract*
- DATABASE WPI, n 92-059288 Derwent Publications Ltd,London,GB; JP-A-3297644(TORAY)27-12-1991 *The entire abstract*
- DATABASE WPI, n 90-129015,Derwent Publications Ltd,London,GB; JP-A-2078544(TORAY)19-03-1990 *The entire abstract*

## Description

### BACKGROUND OF THE INVENTION

### Field of the invention

The present invention relates to a print-laminated product in which a laminate film for the protection of print is laminated to a bonding surface such as printed paper. More particularly, the present invention relates to a print-laminated product which can be obtained using a laminate film for print lamination that can be laminated simply by the application of heat and pressure and without the aid of any adhesive or organic solvent. The laminate film for print lamination according to the present invention provides a print-laminated product with excellent transparency, antiblocking characteristics, processability, collapse, gloss, adhesiveness to bonding surfaces such as printed matter and appearance. This print-laminated product of the invention is useful for, e.g., book covers, catalogue covers, and packaging materials for forming boxes for toys, cameras, etc. having a cavity with window frame.

### Description of the Prior Art

In order to protect the printed side of, for example, a printed pulp paper, synthetic paper or plastic film, and to impart resistance to water and oil, or to make the printed matter look more beautiful by providing higher gloss, a film has conventionally been laminated on the printed paper. This technique is generally referred to as "a print lamination method" in the technical art concerned.

Conventional print lamination methods are;
(1) methods in which an adhesive dissolved in an organic solvent is applied to a plastic film side at the coating section such as a dry laminator, and the organic solvent is evaporated at the drying section, followed by bonding the adhesive-coated side of the plastic film to the printed paper side under the application of heat and pressure, to provide a print-laminated product; and
(2) methods in which the heat-sensitive adhesive layer side of a biaxially stretched polypropylene laminate film, which has applied thereto a heat-sensitive layer comprising two or more kinds of ethylene-alkyl acrylate copolymers, ethylene-vinyl acetate copolymers, etc., is bonded to the printed side of printed paper simply by applying heat and pressure without using any organic solvent type adhesive, to provide a print-laminated product (Japanese Patent Application Laid-open No. 42652/1981, Japanese Patent Publication No. 22431/1992 and Japanese Patent Application Laid-open No. 73341/1991).

However, in method (1) which uses an organic solvent type adhesive, there were several disadvantages such as deterioration of the working environment, environmental problems around the factory, the danger of fire, etc. caused by dispersal of the solvent vapor generated during the drying process of adhesives. Further, defects in the quality of the resulting laminate such as the occurrence of unevenness in adhesiveness to the printed side of the printed paper, color change of print, unclearness of print, etc. caused by the residual solvent in the film. Furthermore, the method has another defect in that the costs of facilities for recovery of the solvent and so on, which are required after coating and drying the solvent, are expensive.

On the other hand, in the film for the heat-pressure bond type of lamination of method (2), there are also some disadvantages to the requirement of easy-adhesiveness to the printed side of the printed paper, that the film is inferior in its slipperiness and antiblocking characteristics since an ethylene-based copolymer resin such as ethylene-vinylacetate copolymer, ethylene-ethylacrylate copolymer having an extremely high functional monomer (vinylacetate, ethylacrylate) content is used as the heat-adhesive layer in the laminate film. Consequently, the film with bad roll-releasability is destined to have a wrinkle during production of the film. In addition, it such film is wound into a roll form for a storage, the adjacent substrate and ethylene-based copolymer resin sides tend to stick to one another. Therefore, when the film is used in print-lamination, the tensile strength for widing off becomes high and it tends to become expanded or broken.

In order to solve the above problems, methods have been proposed for imparting slipperiness and antiblocking characteristics to a film for print lamination. In such methods, however, in the case (a) where a large amount of polymer having poor compatibility, organic lubricant or inorganic particles are added, a serious problem occurs: heat-adhesiveness to printed paper and transparency are remarkably impaired. On the other hand, in the case (b) where an uneven shape (mean roughness Ra = 0.15 to 0.75 µm) is applied to the film surface by stretching the heat-sensitive adhesive layer comprising a mixture of different ethylene-based copolymer resins (Japanese Patent Publication No. 22431/1992), the transparency of the resulting laminate film is bad. In addition, in case (b), when print-lamination is done at low temperature, air is enfolded between the film and the printed paper and the surface of print-laminated paper is uneven, and the enfolded air causes problems such as bad adhesiveness between the printed side and the film, poor appearance of print that is not atractive or beautiful and low gloss (this phenomenon is referred to as "collapse" in this art). In order to improve collapse, raising the temperature during heat-pressure bonding or slowing down the processing speed has been attempted. In such improvements, however, the resulting print-laminated paper itself curls (due to raising the temperature), and/or productivity becomes poor (low processing speed).

### SUMMARY OF THE INVENTION

The present invention has been accomplished for the purpose of improving the above problems. That is, one object of the present invention is to provide:
(i) a film which generates no solvent odor during the print lamination process, which requires no solvent-removing apparatus or solvent-recovery apparatus, and which does not change the color of the print on the printed paper and the like and a print-laminated product produced by using said laminate film; and another object of the present invention is to provide:
(ii) a print-laminated product produced by using the film for print lamination which is excellent in transparency, antiblocking characteristics and processability even when the functional monomer content of the ethylene-based copolymer is large, and which is further excellent in collapse during the print lamination process, appearance, gloss, and so on.

According to the present invention, there is provided a film for print lamination comprising a sheet substrate (a) and an adhesive layer (b) laminated on said substrate (a), wherein said substrate (a) comprises a transparent thermoplastic resin 6 µm or more thick and the adhesive layer (b) comprises an 8 µm or more thick ethylene-based copolymer resin film containing from 70 to 90 % by weight of ethylene and has a lower melt temperature than said substrate (a), and wherein the surface of the adhesive layer (b) is embossed with jag patterns in which the 10 points-mean roughness (Rz) according to JIS-B-0601 of the embossing is from 4.0 to 8.5 µm, the surface ratio of a convex section at a neutral line surface roughness (Sr) lower than 55% and the Beck surface smoothness 500 sec. or lower (according to JIS-P8119).

The present invention also provides a film for heat-pressure bond type print lamination, in which fine embossing (maximum roughness (Rmax) = 0.7 µm or lower; mean roughness (Ra) = 0.05 to 0.3 µm) is further applied to the embossed surface of said ethylene-based resin lamination film described above.

The present invention also provide a print-laminated product which is produced by bonding by heat-pressing the adhesive layer (b) of said film for print lamination described above onto a bonding surface.

### BRIEF DESCRIPTION OF THE DRAWINGS

The construction of the film for print lamination according to the present invention will be illustrated concretely as follows:

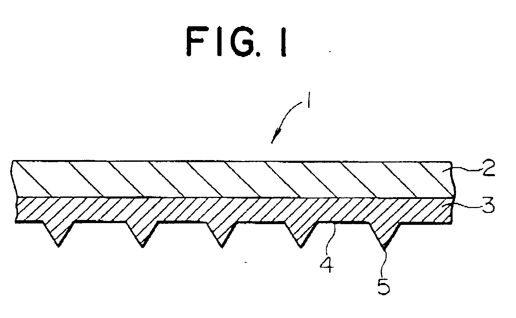

Fig. 1 is a schematic illustration in cross section of a laminate film for print lamination of the present invention.
   In Fig. 1, 1 is a laminate film for print lamination, 2 is a substrate (a) comprising a thermoplastic resin, 3 is an adhesive layer (b) for heat-pressure bonding comprising an ethylene-based copolymer resin film, 4 is a concave face (a valley) of the heliocrasho type of embossed pattern applied to the heat-adhesive layer 3, and 5 is a convex (a crest) of the embossed pattern.

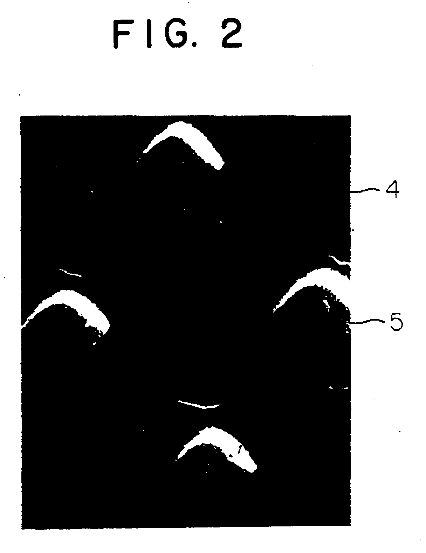

Fig. 2 is an electron microscope photograph (× 500) of the surface of an adhesive layer of a laminate film for print lamination prepared in Example 1.

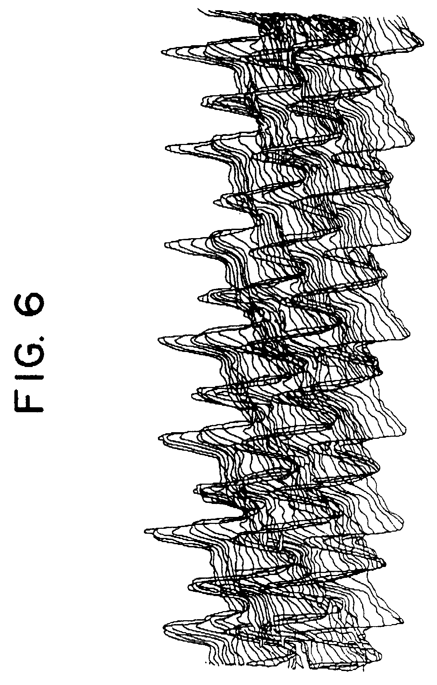

Fig. 3 is an electron microscope photograph (× 500) of the surface of an adhesive layer of a laminate film prepared in Example 6. In Fig. 3, 6 is a fine embossed pattern formed on the concave face 5 of the embossed pattern.

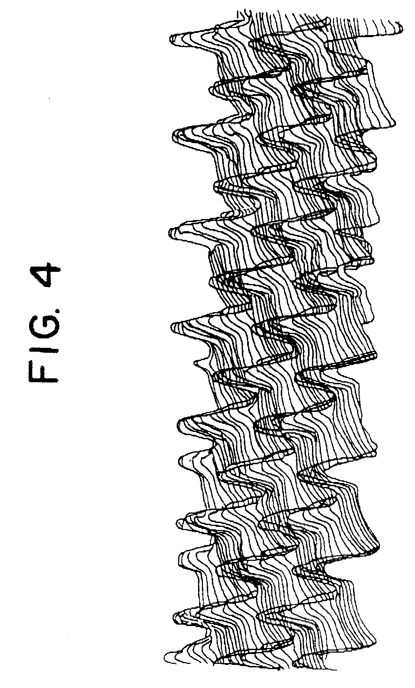

Fig. 4 is a trace given by a roughness meter, which shows the surface roughness of the surface of the laminate film prepared in Example 1.

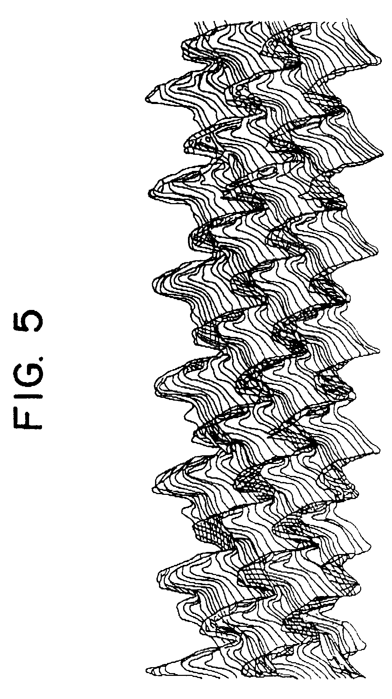

Fig. 5 is a trace given by a roughness meter, which shows the surface roughness of the surface of the laminate film prepared in Example 2.
Fig. 6 is a trace given by a roughness meter, which shows the surface roughness of the surface of the laminate film prepared in Example 6.

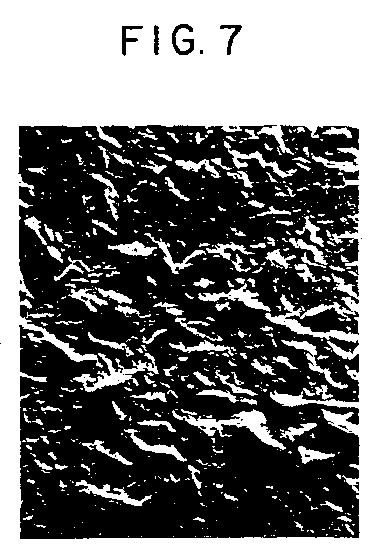

Fig. 7 is an electron microscope photograph (× 500) of the surface of the laminate film prepared in Comparative Example 2.

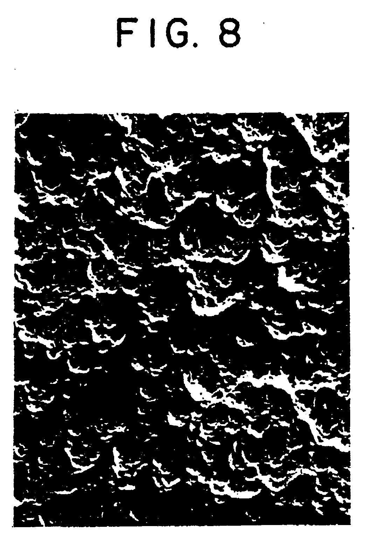

Fig. 8 is an electron microscope photograph (× 500) of the surface of the laminate film prepared in Comparative Example 3.

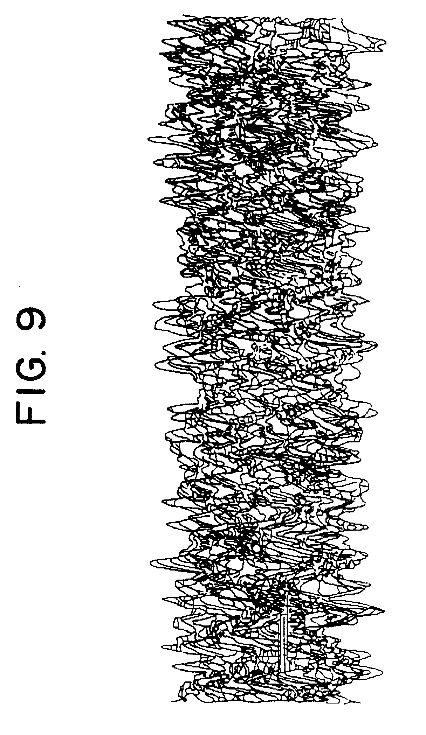

Fig. 9 is a trace given by a roughness meter, which shows the surface roughness of the surface of the laminate film prepared in Comparative Example 3.

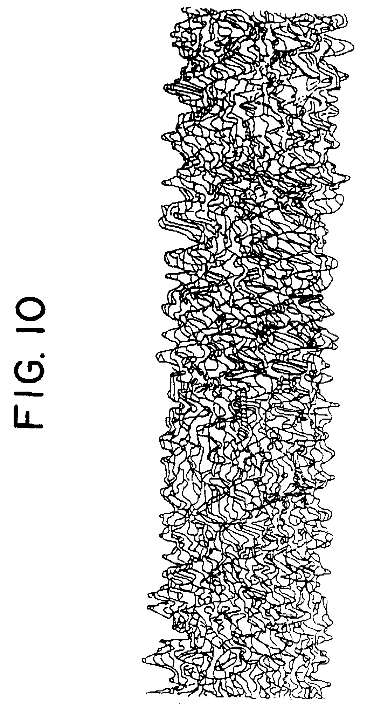

Fig. 10 is a trace given by a roughness meter, which shows the surface roughness of the surface of the laminate film prepared in Comparative Example 2.

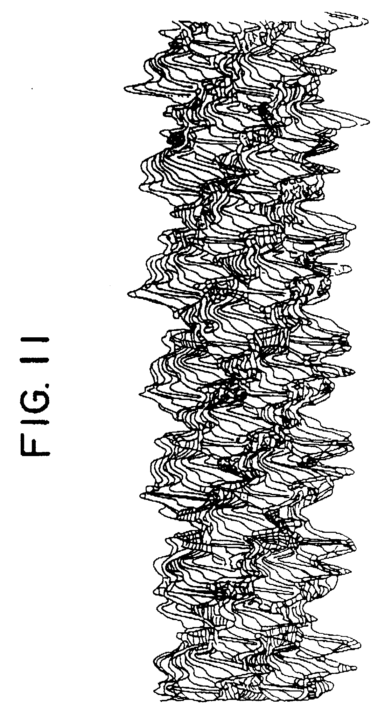

Fig. 11 is a trace given by a roughness meter, which shows the surface roughness of the surface of the laminate film prepared in Comparative Example 1.

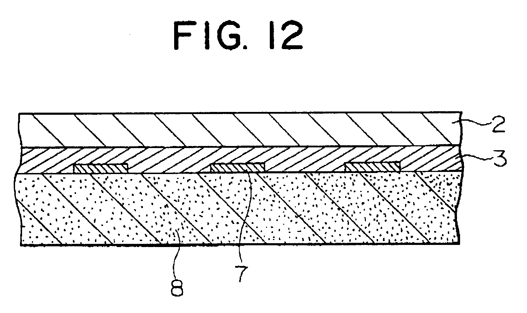

Fig. 12 is a schematic illustration in cross section of a print-laminated printed paper prepared by bonding a film for print lamination of the present invention to a printed paper using a heat-pressure bonding roll. In Fig. 12, 2 is a substrate sheet (a), 3 is an adhesive layer (b), 7 is a printed portion, and 8 is a paper, etc. to be printed on.

### DETAILED DESCRIPTION OF THE INVENTION

### 1. Substrate

As the substrates to be used in the present invention, stretched or non-streched films of thermoplastic resins such as polypropylene, polyethylene, polyethylene telephthalate, polyvinyl chloride, polystyrene, and the like may be used. Among them, in view of transparency, stiffness and strength, biaxially stretched polypropylene films and polyethylene telephthalate films are especially preferred. Mixture of resins may be used.

The thickness of the substrate is from 6 to 100 µm, and preferably from 6 to 40 µm. The haze value (according to ASTM D1003) of the substrate is preferably 5 % or lower.

### 2. Ethylene-based Copolymer Resin

The ethylene-based copolymer resins to be laminated on said substrates are not particularly limited. Examples of such ethylene-based copolymer resins include copolymers of ethylene and a monomer able to copolymerize therewith, such as vinyl acetate, methyl acrylate, ethyl acrylate, methyl methacrylate, acrylic acid, propylene, 1-butene, 1-hexene, etc. Copolymers modified by hydrolysis or bridge formation by metal ions after copolymerization, or copolymers obtained by graft polymerization of polyethylene with maleic anhydride, etc. can also be employed. These copolymers can be used in combination of two or more.

The ethylene-based copolymer resins are required to have 70 % by weight or more of ethylene monomer unit content. An ethylene content of less than 70 % by weight causes poor slipperiness and antiblocking characteristics of the resulting lamination film, as well as bad roll-releasability during production of the film, resulting in significant wrinkling. Furthermore, when such film is laminated on the substrate, the neck-in becomes large, and heat-deterioration is liable to occur. Accordingly, the total ethylene content in the copolymer should be at least 70 % by weight, and is preferably 70 to 90 % by weight.

The ethylene-based copolymer resin layer may contain, as required, lubricants, antiblocking agents, stabilizers, ultraviolet absorbents, antistatic agents, anticlouding agents, coloring agents, and other various additives in amounts within ranges known to those of skill in the art so that the adhesive strength to printed papers and the like is not negatively changed. Generally, these agents are used within the range of 0.01 to 3 % by weight based on the total weight of ethylene-based copolymer resin.

The thickness of the ethylene-based copolymer resin film to be laminated on the substrate is 8 µm or more, and preferably 8 to 40 µm. When the thickness is less than 8 µm, the collapse and gloss of the resulting print-laminated product is not good, and furthermore, the transfer of the embossing deteriorates and blocking resistance becomes inferior. On the other hand, thicknesses of over 40 µm causes not only lowering of the print lamination speed and poor productivity, but also high cost.

The method of laminating the ethylene-based copolymer resin on the substrate layer is not particularly limited so long as an embossed pattern is transferred to the ethylene-based copolymer resin. This can be done before or after lamination. Examples of methods include extrusion lamination methods, co-extrusion methods, a method in which the ethylene-based copolymer resin is laminated on the substrate layer after longitudinal or lateral stretching of the substrate layer, followed by further longitudinal or lateral stretching of the resulting laminate, coating methods, and so on.

If a biaxially stretched film is used as substrate (a), an anchor coating agent should be coated on the surface of the biaxially stretched film in an amount of 1 to 10 g/m², and then the ethylene-based copolymer is laminated thereon. Suitable anchor coating agents are polyethyleneimine, polyetherpolyol-polyisocyanate, polyesterpolyol-polyisocyanate, epichlorhydrine adduct of polyamine-polyamide and so on.

In order to impart heat-adhesiveness to the surface of the ethylene-based copolymer resin, the surface is preferably subjected to oxidation treatment, such as corona discharge treatment, ozone treatment, flame treatment, etc, and is preferably treated so that the wetting tensile strength of the surface is within the range of 36 to 55 mN/m, preferably 40 to 55 mN/m.

### 3. Formation of Embossed Pattern and Its Construction

The embossed pattern formed on the surface of the ethylene-based copolymer resin film laminated on a substrate is one which is not limited, and is preferably formed according to a method in which a softened or melt ethylene-based copolymer resin is pressed to a metal roll having a heliocrasho type or embossing type of regular reverse embossed pattern with crests and valleys by using a rubber roll and so on, and then transferring the reverse-pyramidal shapes to the surface of the ethylene-based copolymer resin film. The embossing should have a construction in which the 10 points-mean roughness (Rz) of the embossing is 4.0 to 8.5 µm, the surface ratio (Sr) of the convex cross section at a neutral line of the surface roughness (that is, the horizontal face through the 1/2 point of the distance between the crest and valley of the embossing) is smaller than 55 %, and the Beck smoothness (according to JIS-P8119) of the surface is smaller than 500 sec., preferably 80 to 400 sec.

If the Rz value of the embossing in the ethylene-based copolymer resin is smaller than 4.0 µm, especially in cases where there is high functional monomer (such as vinylacetate, methylacrylate, ethylacrylate, methyl methacrylate, etc.) content in the ethylene-based copolymer resin (14 to 30 % by weight), the roll-releasability of the laminate in extrusion and lamination of the ethylene-based copolymer film on the substrate is worsened. In this case, when the laminate is wound into a roll shape around a paper tube, wrinkling or blocking is caused. Consequently, the resulting print-laminated products may contain inferior ones, due to residual wrinkling and breaking of the laminate film during print lamination to a printed paper.

On the other hand, if the Rz value of the ethylene-based copolymer resin is over 8.5 µm, or the Sr value is 55 % or higher and the smoothness is over 500 sec, the unevenness and surface area of the embossing of the ethylene-based copolymer film of the heat-sensitive adhesive layer is increased. In this case, the embossing shape provided at the cooling roll section may be transferred to the melting resin in an imperfect condition or uneven cooling may occur during production of the lamination film, or unnecessary patterns or a biased thickness may occur in the laminate film, resulting in bad transparency or differences in thickness of the rolled product (referred to as "bone" or "vein")

In addition, in such cases, the resulting laminate film enfolds air in the uneven parts of the surface during the print lamination process, and is laminated on a printed paper. Consequently, the residual air between the laminate film and the color-printed paper of the resulting print-laminated product causes print color lacking beauty, low gloss and inferior adhesiveness to the printed parts.

The number of points or lines of the embossing is not particularly limited, so far as it can satisfy the ranges of the Rz and Sr values and smoothness. But an embossed pattern having from 47 to 118 per cm is preferable.

An especially preferable surface shape can be achieved where the 10 points-mean roughness (Rz) is 5 to 8 µm, the surface ratio of the convexes (Sr) is 10 to 45 %, and the Beck smoothness is 80 to 400 sec.

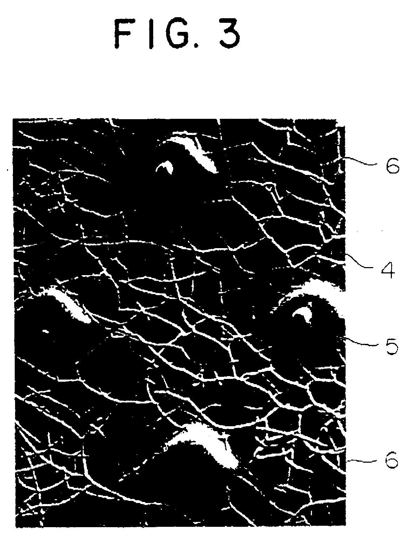

In the present invention, a fine embossing 6 can be further applied to the above embossed face (see Fig. 3). The depth of the fine embossing is from 0.01 µm to 0.7 µm, and its width is from 0.2 to 4 µm. Such fine embossing can be formed using a roll which is obtained by giving a fine embossing pattern to a cooling roll of, for example, a heliocrasho type by a corrosion resistant treatment of micro-mat plating, in a manner that the surface of the heat-adhesive layer of the ethylene-based copolymer film applied with the first embossing is contacted with the roll under pressure.

The fine embossing pattern is transferred to the surface of the ethylene-based copolymer of the laminate film as 0.7 µm maximum of ten-point mean roughness, and 0.05 to 0.3 µm of average ten-point mean roughness.

The heat-pressure bonding of a film for print lamination to a bonding surface of printed matter (paper) can be carried out so that the adhesive layer (b) side of the the film for print lamination is adhered to the print of the printed matter at 49 to 980 N of roll line pressure, using a heating roll heated to 70 to 120°C.

Suitable bonding surfaces include all types of paper, carrying printed material or illustrations, cardboard, pulp paper, synthetic paper, biaxially stretched polypropylene film, laminate of polypropylene and aluminium foil, etc.

The printed matter may have a window to see through a article in a box. The window is obtained by the printed matter.

### EXAMPLES

The present invention will be illustrated more concretely with reference to the following Examples and Comparative Examples. The invention is not limited to these Examples, however.

### Examples 1 to 2 and Comparative Example 1

An ethylene-vinyl acetate copolymer resin having a 15 g/10 min. of MFR (melt flow rate measured according to JIS K-7210; 190°C, 2.16 kg load) and containing 19 % by weight of vinyl acetate (VA) ("Mitsubishi EVA V401S" produced by Mitsubishi Petrochemical Co., Ltd.; melting point 99°C) was melt-extruded from a T-die equipped on an extruder having an opening diameter of 90 mm⌀ in a film of 1300 mm in width and 15 µm in thickness at a resin temperature of 240°C.

On the other hand, a biaxially stretched polypropylene film ("FOR" produced by Futamura Kagaku Kogyo K.K.; haze value of 1.2 %) having a thickness of 15 µm was fed from the substrate feeding section of the laminator. On one side of the film, an isocyanate-based anchor coating agent ("Titabond T-120" produced by Nisso) was coated in an amount of 5 g/m². After drying, the coated polypropylene film and said melting copolymer resin film were led to the pressure-bonding roll so that one side of the melt copolymer film was on adhesive side to be bonded to the anchor coated side of the coated polypropylene film. In the pressure-bonding roll section, the two films were laminated to one another under pressure using a compressing rubber roll and a heliocrasho type cooling roll having 98 lines per cm (there were three kinds of cooling rolls used each having different embossed patterns 〈engraved by 18 cm wide〉, in which the depths of the area ratio of concave parts were 10 µm, 21 µm and 26 µm and the surface ratios of the concave parts were 34 %, 55 % and 59 %, respectively, as the cooling rolls for Example 1, Example 2 and Comparative Example 1, respectively), to give three kinds of laminates of an ethylene-vinyl acetate copolymer resin having different embossed patterns and a biaxially stretched polypropylene film.

The embossed surface of the ethylene-vinyl acetate copolymer resin laminates thus obtained were treated by a corona discharge treatment of 40 w min./m². Then, the treated laminate films were slit into the widths of each embossed pattern size to give films for heat-pressure bonding type print lamination.

As to the resulting films for print lamination, the surface roughness and Beck smoothness of the ethylene-vinyl acetate copolymer resin side having embossed pattern, transparency, blocking characteristics and processability were measured. The results are shown in Table 1.

Next, print-laminated products were prepared in a manner where the above films for print lamination were bonded with offset-printed art paper using a pressure-bonding machine at 80°C roll temperature, 545 N line pressure and 30 m/min. of speed. The resulting products were evaluated for their collapse characteristic, gloss, adhesiveness, appearance, etc. The results are also shown in Table 1.

### Comparative Examples 2 to 3

Other laminate films and print-laminated products were prepared in the same manner as Example 1, except that two cooling rolls processed by a sand-shot were used, in which the depths of the concave parts of embossing were 5 µm and 10 µm, for Comparative Example 2 and 3, respectively. The results are shown in Table 1.

### Examples 3 to 5 and Comparative Example 4

Other laminate films and print-laminated products were prepared in the same manner as Example 1, changing the kinds and thickness of the substrates and the extruded resins and the embossing shapes as shown in Table 1. The evaluation results are also shown in Table 1.

The names of the materials used are listed as follows:
PET: a biaxially stretched polyethylene terephthalate film, 12 µm (produced by Diafoil; haze value of 1.8 %)
EVA: an ethylene-vinyl acetate copolymer (MFR = 15 g/10 min.; vinyl acetate content = 28 % by weight) (Trade name; "Mitsubishi Polyethy EVA-V601S" produced by Mitsubishi Petrochemical Co., Ltd.)
EMA: an ethylene-methyl acrylate copolymer (MFR = 15 g/10 min.; methyl acrylate content = 20 % by weight) (Trade name; "Yukaron EMAXG500S" produced by Mitsubishi Petrochemical Co., Ltd.)

### Example 6

Other laminate and print-laminated products were prepared in the same manner as Example 1, except that a cooling roll in which fine embossing by micro-plating applied to a heliocrasho type cooling roll was used. The fine embossing is about 0.1 µm of depth and about 1 µm of width. The results are shown in Table 1.

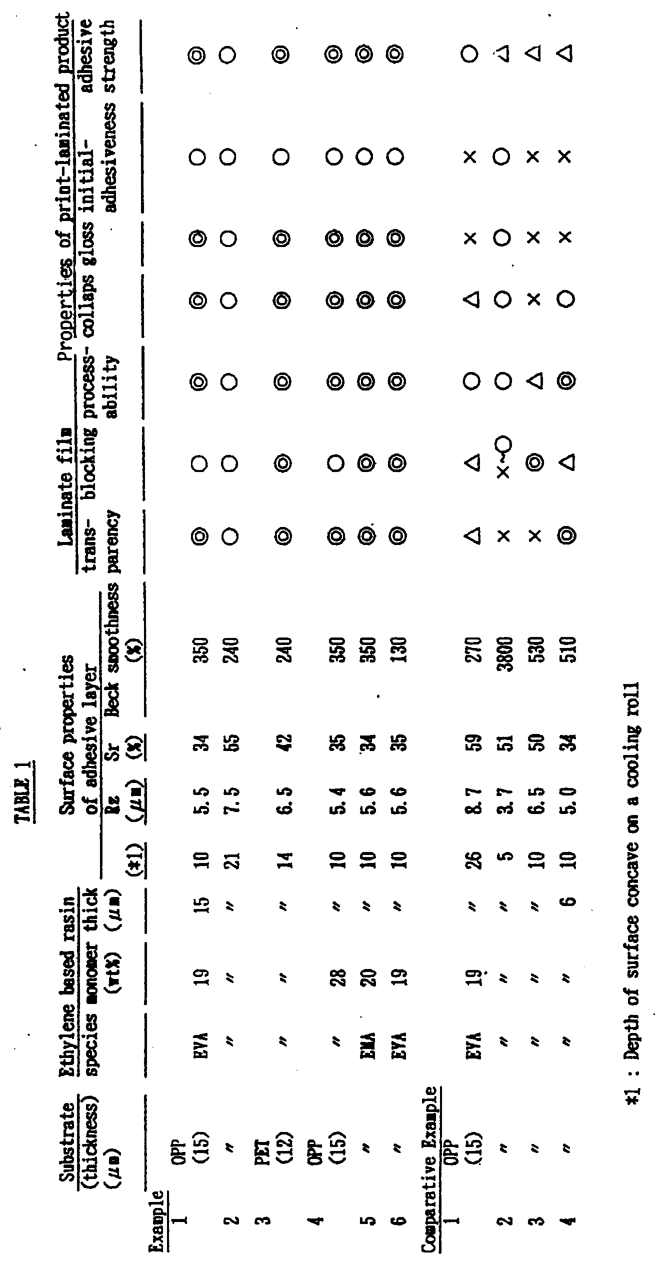

In the examples, various properties of the resulting laminate films and print-laminated products were evaluated according to the following methods:

### 1. Surface Properties of the Adhesive Layer

As to the embossing applied to an ethylene-vinyl acetate copolymer resin of a laminate film, the 10 points-mean roughness (Rz) and the surface ratio of the convex cross section (Sr) were measured using a surface roughness meter ["Surfcorder ET-30HK" produced by Kosaka Kenkyu-sho K.K.].

### 〈10 points-Mean Roughness〉

The 10 points-mean roughness is a value given by dividing the sum of heights of 5 crests which are the highest crest to the fifth highest crest existing in a 1 mm embossing length measured portion with the sum of depths of 5 valleys which are the deepest valley to the fifth deepest valley existing in said measured portion (according to JIS B-0601).

### 〈Surface Ratio of the Convex Cross Section at Neutral Line〉

The surface ratio of the convex cross section at a neutral line is a value occupied by the sum of each crest cross section area in a 0.1 mm² of emboss-processing area, the crest cross section area being given by cutting the convex at a neutral line at which two areas of crest and valley become equal.

### 〈Beck Smoothness〉

The Beck smoothness is a value measured according to JIS-P8119.

### 2. Properties of the Laminate Film

### 〈Transparency〉

The haze value of laminate film was measured according to ASTM D1003 using a "Direct Reading Haze Meter" (trade name produced by Toyo Seiki Seisaku-sho, Ltd.). The transparency was evaluated in the range of ⓞ to X according to the following judgements:

| Haze value | Judgement |
|---|---|
| 0 to lower than 25 % | ⓞ |
| 25 to lower than 50 % | ○ |
| 50 to lower than 75 % | △ |
| higher than 75 % | X |

### 〈Blocking Characteristic〉

The biaxially stretched polypropylene film side (2) of a laminate film 21 cm wide × 29 cm long was superposed on the ethylene-vinyl acetate copolymer resin side (3) applied with embossing form, and loaded at 5 kPa (0.05 kg/cm²) in an oven of 60°C over an area 15 cm wide × 20 cm long. After standing for 24 hours, the superposed laminate film was cut off so that the shearing peel area of the film became 10 cm² (2 cm wide × 5 cm long) and the force required for peeling was measured using a tensile tester. In this test, the smaller value shows superior antiblocking characteristic. A laminate film was evaluated according to the following judgements: one having a peeling force of 20 N or higher and being broken by film peeling as X ; one having a peeling force of 15 N to less than 20 N and being extended to its full length at peeling as △ ; one having a peeling force of 10 N to less than 15 N and being slightly extended at peeling but restored as ○ ; and one having a peeling force of less than 10 N and exhibiting little resistance at peeling as ⓞ .

### 〈Processability〉

The processability was evaluated on the basis of the rolling appearance of the laminate film when a 2000 m of film was taken up in a roll and the measured value of the biased thickness of the laminate film, according to the following:
ⓞ : good rolling appearance and biased thickness of ± 0.5 µm
○ : good rolling appearance and biased thickness of ± 1.0 µm
△ : wrinkling in the rolling appearance and biased thickness of ± 1.5 µm
X : occurrence of thickness difference in the roll (bone) and biased thickness of ± 2.0 µm

### 3. Print Lamination Properties

### 〈Collapse〉

The collapse condition of a print-laminated product of the laminate film provided in the above examples on art paper printed over its whole surface in black was observed visually, and evaluated according to the following: (Collapse: a condition where air is enfolded between the printed side of a print-laminated product and the ethylene-based resin which is heat-adhered therewith, the enfolded air remaining as a white spot.)
ⓞ : no residual air and the printed color appearing clear seeming to have depth
○ : little residual air and the printed color being confirmable
△ : residual air appearing as lines on the printed color
X : residual air appearing as strips on the printed color and the printed color not being easily confirmable

### 〈Gloss〉

When the ΔE value of a print-laminated product, which evaluating their collapse, was measured on the basis of the ΔE value of a biaxially stretched polypropylene film (15 µm) adhered closely to a black standard board face of a spectrophotometer ["Colorcom B" produced by Danichiseika Color & Chemicals Mfg. Co., Ltd.] by water drops, the results coincided with the results given by visual observation (that is, collapse). Consequently, gloss was evaluated according to the following judgements:

| Gloss (ΔE value) | |
|---|---|
| ⓞ | 0 to lower than 1.5 |
| ○ | 1.5 to lower than 2.5 |
| △ | 2.5 to lower than 40 |
| X | larger 4.0 |

The lower ΔE value shows better gloss of a print-laminated product. (Black standard board/water/OPP value = 0)

### 〈Initial adhesiveness〉

To a print-laminated product having a 590 mm of width, which was prepared by bonding a printed art paper to a laminate film given in the above examples using a print laminator having a roll temperature of 90°C, a line pressure of 545 N and a speed of 35 m/min. ["KL-2 type" produced by Hamamatsu Seisakusho K.K.] under heat and pressure, a cellophane adhesive tape (15 mm wide × 100 mm long) was pasted. After scrubbing the cellophane adhesive tape side with fingers several times, the tape was peeled. The initial adhesiveness between the printed art paper and the laminate film prepared according to the above examples was evaluated by observation of the condition at the peeling as follows:
○ : unchanged
△ : a laminate film releasing partially from the printed art paper
X : a lamination film releasing entirely from the printed
art paper

### 〈Adhesive Strength〉

After peeling the laminate film partially from the printed art paper in a test piece of said print-laminated product (25 mm wide × 100 mm long) 50 mm to the length direction by hand, the laminate film was further peeled in the 180° direction entirely from the printed art paper using a tensile test machine produced by Shimadzu Corporation at a tensile speed of 300 mm/min. The adhesive strength was evaluated according to the value given by the above measurement as follows:
ⓞ : 1.5 N/25 mm or higher
○ : 1.0 to lower than 1.5 N/25 mm
△ : 0.5 to lower than 1.0 N/25 mm
X : lower than 0.5 N/25 mm

As described above, a film for print lamination used in a print-laminated product of the present invention has a surface layer comprising an ethylene-based copolymer resin, on which a regular embossing of specific shape is applied. Therefore, the film can have excellent transparency, antiblocking characteristic and processability. By using such film, the conventional troubles in print lamination, such as the opacity caused by the conventional embossing shape and the enfolding of air in the print-laminated product prepared by bonding such film on a printed matter under heat and pressure, can be solved. Furthermore, such film can make the temperature range in print lamination processing wide and can provide a print-laminated product with excellent appearance and high gloss. In addition, according to the present invention, not only is the working environment improved and the need for solvent-removing or solvent-recovering apparatus dispensed with during lamination of the film for print lamination to a printed matter, but also the color of printed ink of the print-laminated product is not changed, as none of the conventional organic solvents are used.

## Claims

1. A film for print lamination comprising a sheet substrate (a) and an adhesive layer (b) laminated on said substrate (a), wherein said substrate (a) comprises a transparent thermoplastic resin 6 µm or more thick and the adhesive layer (b) comprises from 8 µm to 40 µm thick ethylene-based copolymer resin film containing from 70 to 90 % by weight of ethylene and has a lower melt temperature than said substrate (a), and wherein the surface of the adhesive layer (b) is embossed with jag patterns in which the 10 points-mean roughness (Rz), according to JIS-B-0601, of the embossing is from 4.0 to 8.5 µm, the surface ratio of a convex section at a neutral line surface roughness (Sr) lower than 55 % and the Beck surface smoothness 500 sec. or lower, according to JIS-P8119.

2. A print-laminated product which is produced by bonding by heat-pressing the adhesive layer (b) of said film for print lamination described in Claim 1 onto a bonding surface of a printed matter.

3. The print-laminated product according to Claim 2, wherein said embossed adhesive layer of the film for print lamination has a further embossing applied thereto with a depth of 0.01 to 0.7 µm and a width of 0.2 to 4 µm.

4. Process for preparing the print-laminated product as defined in Claim 2, wherein the embossing is applied using a heliocrasho type roll.

5. Process for preparing the print-lamination product as defined in Claim 3, wherein the further embossing is applied using a roll obtained by imparting further fine embossing to the surface of the heliocrasho type roll by a corrosion-resistant treatment of micro-mat plating.

6. The print-laminated product according to Claim 2, in which the Beck smoothness according to JIS-P8119 of the adhesive layer (b) of the film for print lamination is from 80 to 400 sec.

7. The print-laminated product according to Claim 2, which is characterized in that the adhesive layer (b) of the film for print lamination is oxidatively treated by a means selected from the group consisting of corona discharge treatment means, ozone treatment means, plasma treatment means and flame treatment means.

8. The print-laminated product according to Claim 2, in which the wetting tension of the surface of the adhesive layer (b) of the film for print lamination is from 36 to 55 mN/m.

9. The print-laminated product according to Claim 2, in which the bonding surface is one which is prepared by printing printed matter on a substrate selected from the group consisting of pulp paper, synthetic paper, plastic film, aluminium foil and laminate therof.

10. The print-laminated product according to Claim 2, in which the sheet substrate (a) of the film for print lamination is a biaxially stretched polypropylene film or a biaxially stretched polyethylene terephthalate film, each having a thickness of from 6 to 100 µm.

11. The print-laminated product according to Claim 10, in which the haze value of the substrate (a) according to ASTM D1003 is 5% or below.

12. The print-laminated product according to Claim 10, which is characterized in that substrate (a) and adhesive layer (b) are laminated to one another through an anchor coating agent.

13. Process for preparing the print-laminated product as defined in Claim 2, in which the adhering of the bonding surface and the film for print lamination is effected under the application of heat and pressure and is carried out by using a heating roll at a temperature of from 70 to 120 °C.

14. Process for preparing the print-laminated product according to Claim 4, in which the number of the crests of the heliocrasho type embossing roll is from 47 to 118 per cm.

15. The print-laminated product according to Claim 2, in which the printed matter is bored for a window.

## Patentansprüche

1. Film für das Drucklaminieren, umfassend ein Blattsubstrat (a) und eine Klebschicht (b), mit der das genannten Substrat (a) laminiert ist, wobei das genannte Substrat (a) ein transparentes thermoplastisches Harz mit einer Dicke von 6 µm oder mehr umfaßt und die Klebschicht (b) einen Copolymer-Harzfilm auf Ethylenbasis mit einer Dicke von 8 µm bis 40 µm, der 70 bis 90 Gew.% Ethylen enthält und eine niedrigere Schmelztemperatur als das genannte Substrat (a) aufweist, umfaßt, und worin die Oberfläche der Klebschicht (b) mit gezackten Formen geprägt ist, in denen die mittlere 10-Punkte-Rauhtiefe (Rz) der Prägung gemäß JIS-B-0601 von 4,0 bis 8,5 µm beträgt, der Oberflächenanteil eines konvexen Abschnitts bei einer Neutrallinien-Oberflächenrauhtiefe (Sr) niedriger als 55% ist und die Beck-Oberflächenglätte gemäß JIS-P8119 500 Sek. oder weniger beträgt.

2. Drucklaminiertes Erzeugnis, welches durch Verkleben der Klebschicht (b) des genannten, im Anspruch 1 beschriebenen Films für das Drucklaminieren, mit einer Bindungsoberfläche eines Druckerzeugnisses mittels Heißpressen hergestellt wird.

3. Drucklaminiertes Erzeugnis gemäß Anspruch 2, worin die genannte geprägte Klebschicht des Films für das Drucklaminieren eine weitere darauf applizierte Prägung mit einer Tiefe von 0,01 bis 0,7 µm und einer Breite von 0,2 bis 4 µm aufweist.

4. Verfahren zur Herstellung des drucklaminierten Erzeugnisses im Anspruch 2 definiert ist, worin die Prägung unter Verwendung einer Walze vom Heliocrashotyp appliziert wird.

5. Verfahren zur Herstellung des drucklaminierten Erzeugnisses, wie es im Anspruch 3 definiert ist, worin die weitere Prägung unter Verwendung einer Walze, die durch Übertragen einer weiteren Feinprägung auf die Oberfläche der Walze vom Heliocrashotyp erhalten wird, mittels einer korrosionsresistenten Behandlung des Mikro-Mattplattierens appliziert wird.

6. Drucklaminiertes Erzeugnis gemäß Anspruch 2, worin die Beck-Glätte der Klebschicht (b) des Films für das Drucklaminieren gemäß JIS-P8119 von 80 bis 400 Sek. beträgt.

7. Drucklaminiertes Erzeugnis gemäß Anspruch 2, welches dadurch gekennzeichnet ist, daß die Klebschicht (b) des Films für das Drucklaminieren oxidatv mit Mitteln behandelt wird, die aus Coronarentladungsbehand-lungsmitteln, Ozonbehandlungsmitteln, Plasmabehandlungs-mitteln und Flammbehandlungsmitteln ausgewählt sind.

8. Drucklaminiertes Erzeugnis gemäß Anspruch 2, worin die Benetzungsspannung der Oberfläche der Klebschicht (b) des Films für das Drucklaminieren 36 bis 55 mN/m beträgt.

9. Drucklaminiertes Erzeugnis gemäß Anspruch 2, worin die Bindungsoberfläche eine solche ist, die durch Drucken eines Druckerzeugnisses auf ein Substrat, welches aus der Gruppe ausgewählt ist, die aus Zellstoffpapier, synthetischem Papier, einem Kunststoffilm, einer Aluminiumfolie und einem Laminat hiervon besteht, hergestellt wird.

10. Drucklaminiertes Erzeugnis gemäß Anspruch 2, worin das Blattsubstrat (a) des Films für das Drucklaminieren ein biaxial gestreckter Polypropylenfilm oder ein biaxial gestreckter Polyethylenterephthalatfilm ist, von denen jeder eine Dicke von 6 bis 100 µm aufweist.

11. Drucklaminiertes Erzeugnis gemäß Anspruch 10, worin der Trübungswert des Substrats (a) gemäß ASTM-D1003 bei 5% oder darunter liegt.

12. Drucklaminiertes Erzeugnis gemäß Anspruch 10, welches dadurch gekennzeichnet ist, daß das Substrat (a) und die Klebschicht (b) durch ein hafterzeugendes Beschichtungsmittel aneinander laminiert sind.

13. Verfahren zur Herstellung des laminierten Druckerzeugnisses, wie es im Anspruch 2 definiert ist, worin das Zusammenhaften der Bindungsoberfläche mit dem Film für das Drucklaminieren unter Anwendung von Hitze und Druck bewirkt und unter Verwendung einer beheizten Walze bei einer Temperatur von 70 bis 120°C durchgeführt wird.

14. Verfahren zur Herstellung des laminierten Druckerzeugnisses gemäß Anspruch 4, worin die Anzahl der Scheitel der zum Prägen verwendeten Walze vom Heliocrashotyp von 47 bis 118 pro cm beträgt.

15. Drucklaminiertes Erzeugnis gemäß Anspruch 2, worin das Druckerzeugnis für ein Fenster ausgebohrt ist.

## Revendications

1. Film pour stratification par impression comprenant un substrat en feuille (a) et une couche adhésive (b) stratifiée sur ledit substrat (a), dans lequel ledit substrat (a) comprend une résine thermoplastique transparente d'une épaisseur de 6 µm, ou plus, et dans lequel la couche adhésive (b) comprend un film de résine d'un copolymère à base d'éthylène d'une épaisseur de 8 µm à 40 µm contenant de 70 à 90 % en poids d'éthylène et a une température de fusion inférieure audit substrat (a), et dans lequel la surface de la couche adhésive (b) est gravée en relief avec des motifs rugueux dans lesquels la rugosité moyenne sur 10 points (Rz), en conformité avec JIS-B-0601, de la gravure, est de 4,0 à 8,5 µm, le rapport de surface d'une section convexe à une rugosité de surface de ligne neutre (Sr) est inférieur à 55 % et l'uniformité de surface de Beck est de 500 sec., ou moins, en conformité avec JIS-P8119.

2. Produit stratifié par impression qui est produit par collage en pressant par l'action de la chaleur la couche adhésive (b) dudit film pour stratification par impression selon la revendication 1, sur une surface collante d'une matière imprimée.

3. Produit stratifié par impression selon la revendication 2, dans lequel ladite couche adhésive en relief du film pour stratification par impression comporte une autre gravure qui lui est appliquée avec une profondeur de 0,01 à 0,7 µm et une largeur de 0,2 à 4 µm.

4. Procédé de préparation du produit stratifié par impression selon la revendication 2, dans lequel la gravure est appliquée en utilisant un rouleau de type heliocrasho.

5. Procédé de préparation du produit de stratification par impression selon la revendication 3, dans lequel une gravure supplémentaire est appliquée en utilisant un rouleau obtenu en communiquant une gravure fine supplémentaire à la surface du rouleau de type heliocrasho par un traitement résistant à la corrosion par électrodéposition du type micro-mat.

6. Produit stratifié par impression selon la revendication 2, dans lequel l'uniformité de Beck en conformité avec JIS-P8119 de la couche adhésive (b) du film pour stratification par impression est de 80 à 400 sec.

7. Produit stratifié par impression selon la revendication 2, qui est caractérisé en ce que la couche adhésive (b) du film pour stratification par impression est traité par oxydation par un moyen choisi dans le groupe constitué du moyen de traitement par décharge corona, du moyen de traitement à l'ozone, du moyen de traitement par plasma et du moyen de traitement par flamme.

8. Produit stratifié par impression selon la revendication 2, dans lequel la tension au mouillage de la surface de la couche adhésive (b) du film pour stratification par impression est de 36 à 55 mN/m.

9. Produit stratifié par impression selon la revendication 2, dans lequel la surface de collage est du type que l'on prépare en imprimant une matière imprimée sur un substrat choisi dans le groupe constitué de la pulpe de papier, de papier synthétique, de film en matière plastique, de papier d'aluminium et de leurs stratifiés.

10. Produit stratifié par impression selon la revendication 2, dans lequel le substrat en feuille (a) du film pour stratification par impression est un film de polypropylène biaxialement étiré ou un film de polytéréphtalate d'éthylène biaxialement étiré, chacun ayant une épaisseur de 6 à 100 µm.

11. Produit stratifié par impression selon la revendication 10, dans lequel la valeur de voile du substrat (a) en conformité avec ASTM D1003 est de 5 % ou en dessous.

12. Produit stratifié par impression selon la revendication 10, qui est caractérisé en ce que le substrat (a) et la couche adhésive (b) sont stratifiés l'un sur l'autre par un agent de couchage à ancre.

13. Procédé de préparation du produit de stratification par impression selon la revendication 2, dans laquelle l'adhérence de la surface collante et du film pour stratification par impression est réalisée sous application de chaleur et de pression et est conduite en utilisant un rouleau chauffant à une température allant de 70 à 120 °C.

14. Procédé de préparation du produit pour stratification par impression selon la revendication 4, dans lequel le nombre des crêtes du rouleau de gravure de type heliocrasho est de 47 à 118 par cm.

15. Produit pour stratification par impression selon la revendication 2, dans lequel la matière imprimée est alésée pour ménager une fenêtre.
